(19) Europäisches Patentamt
European Patent Office
Office européen des brevets

(11) **EP 2 290 516 A1**

(12) **EUROPEAN PATENT APPLICATION**

(43) Date of publication:
**02.03.2011 Bulletin 2011/09**

(51) Int Cl.:
***G06F 3/048*** (2006.01)

(21) Application number: **10173449.9**

(22) Date of filing: **19.08.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(30) Priority: **24.08.2009 US 236376 P**
**05.03.2010 US 718729**

(71) Applicant: **HTC Corporation**
**Taoyuan County 330 (TW)**

(72) Inventors:
• **Lai, Ming-Te**
**Taoyuan City, Taoyuan County 330 (TW)**
• **Lee, Cheng-Chung**
**Taoyuan City, Taoyuan County 330 (TW)**
• **Hsu, Li-Chun**
**Taoyuan City, Taoyuan County 330 (TW)**
• **Chen, Wei-Shao**
**Taoyuan City, Taoyuan County 330 (TW)**

(74) Representative: **2K Patentanwälte Blasberg**
**Kewitz & Reichel**
**Partnerschaft**
**Corneliusstraße 18**
**60325 Frankfurt am Main (DE)**

(54) **Systems and methods for application management**

(57) Methods and systems for application management are provided. First, a first picture of an application is displayed on a lower display layer in a touch-sensitive display unit. At least one contact on the touch-sensitive display unit is detected. In response to the at least one contact, a second picture is displayed on an upper display layer in the touch-sensitive display unit, wherein the upper display layer is visually above the lower display layer.

FIG. 2

**Description**

**CROSS REFERENCE TO RELATED APPLICATIONS**

This Application claims priority of U.S. Provision Application No. 61/236,376, filed on August 24, 2009, and priority of U.S. Application No. 12/718,729, filed on March 5, 2010, the entirety of which is incorporated by reference herein.

**BACKGROUND OF THE INVENTION**

**Field of the Invention**

The disclosure relates generally to systems and methods for application management, and, more particularly to systems and methods that create a virtual desktop for an application or an illusion of a virtual desktop.

**Description of the Related Art**

Recently, portable devices, such as handheld devices, have become more and more technically advanced and multifunctional. For example, a handheld device may have telecommunications capabilities, e-mail message capabilities, an advanced address book management system, a media playback system, and various other functions. Due to increased convenience and functions of the devices, these devices have become necessities of life.

Currently, a handheld device may be equipped with a touch-sensitive display unit. Users can directly perform operations, such as application operations and data input via the touch-sensitive display unit. Generally, a plurality of applications can be installed in a handheld device to provide various functions. However, the application functions are normally fixed, and may not fully satisfy user demands.

**BRIEF SUMMARY OF THE INVENTION**

Systems and methods for application management are provided.

An electronic device is disclosed that comprises a touch-sensitive display unit, and a management module that can create and display a virtual desktop illusion in the touch-sensitive display unit for an application in the electronic device. In some embodiments, the management module can receive related inputs from the touch-sensitive display unit, performs operations according to the inputs, and selectively provide the inputs to the application. The application can operate according to the inputs.

In an embodiment of a method for application management, a first picture of an application is displayed on a lower display layer in a touch-sensitive display unit. At least one contact on the touch-sensitive display unit is detected. In response to the at least one contact, a second picture is displayed on an upper display layer in the touch-sensitive display unit, wherein the upper display layer is visually above the lower display layer.

An embodiment of a system for application management includes a touch-sensitive display unit, a storage unit, and a processing unit. The storage unit includes a first picture of an application. The touch-sensitive display unit displays the first picture of the application on a lower display layer. The processing unit detects at least one contact on the touch-sensitive display unit. In response to the at least one contact, the processing unit displays a second picture on an upper display layer in the touch-sensitive display unit, wherein the upper display layer is visually above the lower display layer.

In some embodiments, a viewport is set according to the positions of the first and second contacts, and the viewport is displayed as the second picture on the upper display layer in the touch-sensitive display unit, wherein the viewport is a region defined by the contacts in the first picture. In some embodiments, a part of the picture defined by the viewport is magnified to a size of the whole display area of the touch-sensitive display unit, and displayed in the upper display layer in the touch-sensitive display unit.

In some embodiments, it is determined whether the time of the at least one contact on the touch-sensitive display unit is greater than a predefined value. When the time of the at least one contact on the touch-sensitive display unit is greater than the predefined value, a notification is displayed as the second picture on the upper display layer in the touch-sensitive display unit. In some embodiments, a movement of the at least one contact is detected, and position information regarding the movement is transmitted to the application to accordingly select at least one target in the first picture.

In some embodiments, the second picture is an animation, and once the at least one contact is no longer detected on the touch-sensitive display unit, the animation is stopped to be displayed in the touch-sensitive display unit.

Systems and methods for application management may take the form of a program code embodied in a tangible media. When the program code is loaded into and executed by a machine, the machine becomes an apparatus for practicing the disclosed method.

**BRIEF DESCRIPTION OF THE DRAWINGS**

The invention will become more fully understood by referring to the following detailed description with reference to the accompanying drawings, wherein:

Fig. 1 is a schematic diagram illustrating an exemplary embodiment of a system for application management of the invention;

Fig. 2 is a flowchart of an exemplary embodiment of a method for application management of the invention;

Fig. 3 is a flowchart of another exemplary embodiment of a method for application management of the invention;

Fig. 4 is a flowchart of another exemplary embodiment of a method for application management of the invention; and

Fig. 5 is a flowchart of another exemplary embodiment of a method for application management of the invention.

**DETAILED DESCRIPTION OF THE INVENTION**

Systems and methods for application management are provided.

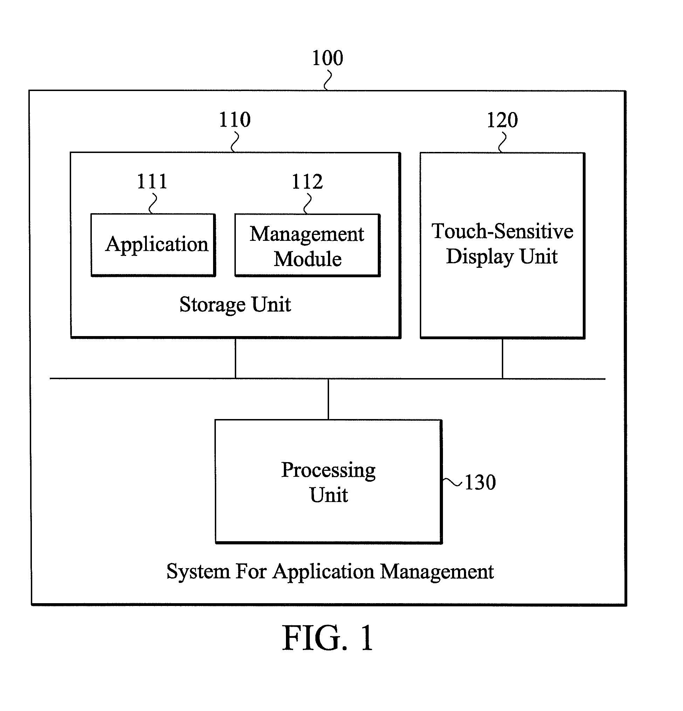

Fig. 1 is a schematic diagram illustrating an exemplary embodiment of a system for application management of the invention. The system for application management can be used in an electronic device, such as a PDA (Personal Digital Assistant), a smart phone, a mobile phone, a MID (Mobile Internet Device, MID), a laptop computer, a car computer, a digital camera, a multi-media player, a game device, or any other type of mobile computational device, however, it is to be understood that the invention is not limited thereto.

The system for application management 100 comprises a storage unit 110, a touch-sensitive display unit 120, and a processing unit 130. The storage unit comprises an application 111 and a management module 112. The application 111 may have at least one interface and/or picture. When the application 111 is executed, related data, such as an interface and/or picture can be displayed in the touch-sensitive display unit 120. The touch-sensitive display unit 120 is a screen integrated with a touch-sensitive device (not shown). The touch-sensitive device has a touch-sensitive surface comprising sensors in at least one dimension to detect contact and movement of an input tool (object), such as a stylus or finger near or on the touch-sensitive surface. The management module 112 can obtain related data of the application. It is understood that, the related data can be obtained from a memory buffer (not shown) of the touch-sensitive display unit 120, or directly from the application 111. It is noted that, the management module 112 may be an independent application, a part of an Operating System of the electronic device, or a driver of the touch-sensitive display unit 120. The management module 112 can also receive inputs via the touch-sensitive display unit 120. The management module 112 performs operations/determinations according to the inputs and the operational data, and creates a virtual desktop illusion for the application. In some embodiments, the creation of the virtual desktop illusion is performed by generating and displaying a zoom in/out picture/notification/animation in the touch-sensitive display unit 120. In some embodiments, the virtual desktop illusion is displayed in an upper display layer above a lower display layer displaying a picture of the application 111. Further, in some embodiments, the management module 112 can receive multiple inputs via the touch-sensitive display unit 120. The management module 112 transforms the multiple inputs, and provides the transformed multiple inputs to the application 111. The application 111 can perform related operations according to the transformed multiple inputs. The processing unit 130 can execute the application 111 and the management module 112, and perform the method for application management of the present invention, which will be discussed further in the following paragraphs.

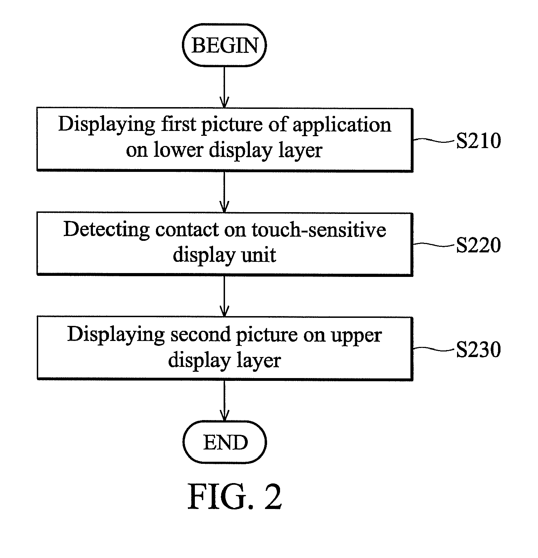

Fig. 2 is a flowchart of an exemplary embodiment of a method for application management of the invention. The method for application management can be used for an electronic device, such as a PDA (Personal Digital Assistant), a smart phone, a mobile phone, a MID (Mobile Internet Device, MID), a laptop computer, a car computer, a digital camera, a multi-media player or a game device.

In step S210, a first picture of an application is displayed on a lower display layer in a touch-sensitive display unit. It is noted that, multiple display layers can be displayed simultaneously in the touch-sensitive display unit. When multiple display layers are simultaneously displayed in the touch-sensitive display unit, all or a part of a picture displayed in a lower display layer can be covered by another picture displayed in an upper display layer. The upper display layer is visually above the lower display layer. It is understood that, the concept of the display layer can be supported by software or hardware. In step S220, at least one contact of an input tool (object), such as a stylus or a finger near or on the touch-sensitive display unit is detected. It is understood that, in some embodiments, the first N samples of the detected contacts are kept to avoid mis-touch of the touch-sensitive display unit. In response to the contact, in step S230, a second picture is displayed on an upper display layer in the touch-sensitive display unit. The second picture is a virtual desktop illusion for the application. In some embodiments, the second picture is a part of the first picture.

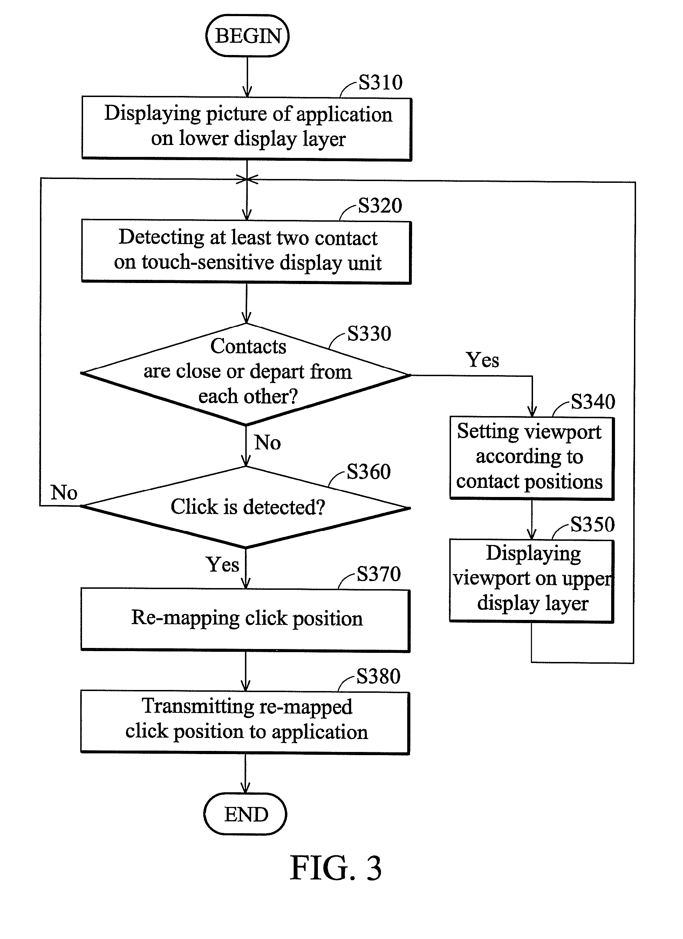

Fig. 3 is a flowchart of another exemplary embodiment of a method for application management of the invention. The method for application management can be used for an electronic device, such as a PDA (Personal Digital Assistant), a smart phone, a mobile phone, a MID (Mobile Internet Device, MID), a laptop computer, a car computer, a digital camera, a multi-media player or a game device. In this embodiment, a scaling function is disclosed.

In step S310, a picture of an application is displayed on a lower display layer in a touch-sensitive display unit. Similarly, multiple display layers can be displayed simultaneously in the touch-sensitive display unit. When multiple display layers are simultaneously displayed in the touch-sensitive display unit, all or a part of the picture displayed in a lower display layer can be covered by another picture displayed in an upper display layer. The upper display layer is visually above the lower display layer. In step S320, at least two contacts of an input tool (object), such as a stylus or a finger near or on the touch-sensitive display unit are detected. Similarly, in some embodiments, the first N samples of the detected contacts are kept to avoid mis-touch of the touch-sensitive display unit. In step S330, it is determined whether the contacts are close to or depart from each other. When the contacts are close to or depart from each other (Yes in step S330), in step S340, a viewport is set according to the positions of the contacts. It is noted that, the viewport may be a region defined by the contacts in the picture of the application. In some embodiments, the viewport may have viewport parameters, such as coordinates and/or length and width of the viewport. The viewport parameters can be set based on the positions of the contacts. It is understood that, in some embodiments, when the contacts are close to each other, the viewport becomes larger, and when the contacts depart from each other, the viewport becomes smaller. After the viewport is set, in step S350, the viewport is displayed on the upper display layer in the touch-sensitive display unit, and the procedure returns to step S320. It is understood that, in some embodiments, when the viewport is displayed in the upper display layer, a part of the picture defined by the viewport is magnified to be displayed in the touch-sensitive display unit. In some embodiments, the viewport can be magnified to a size of the whole display area of the touch-sensitive display unit. Additionally, it is understood that, in some embodiments, when the picture displayed in the lower display layer is updated by the application, the viewport displayed in the upper display layer is also accordingly updated since the part of the picture defined by the viewport in the lower display layer is updated. When the contacts are not close to or does not depart from each other (Yes in step S330), in step S360, it is determined whether a click is further detected. If no click is detected (No in step S360), the procedure returns to step S320. If a click is detected (Yes in step S360), in step S370, the click position is re-mapped, and in step S380, the re-mapped click position is transmitted to the application. It is understood that, for position re-mapping, it is assumed that N is a scaling ratio, (DISP_X, DISP_Y) is the resolution of the original desktop (display unit), (X1, Y2) to (X2, Y2) is the area to be enlarged, (Xv, Yv) is the position where user contacts the virtual desktop (upper display layer), and (Xn, Yn) is the re-mapped position for a target to be selected. The re-mapping of click position can be performed using the following equations.

$$N = (DISP\_X) / (X2\text{-}X1) = (Xv\text{-}0) / (Xn\text{-}X1)$$

$$Xv = (Xn\text{-}X1) * (DISP\_X/(X2\text{-}X1))$$

$$Xn = Xv * ((X2\text{-}X1)/DISP\_X) + X1$$

$$N = (DISP\_Y) / (Y2\text{-}Y1) = (Yv\text{-}0) / (Yn\text{-}Y1)$$

$$Yv = (Yn\text{-}Y1) * (DISP\_Y/(Y2\text{-}Y1))$$

$$Yn = Yv * ((Y2-Y1)/DISP\_Y)+Y1$$

In some embodiment, the application can select a specific target, such as object, text or item located at the re-mapped click position.

It is understood that, in the embodiment of Fig. 3, the viewport is set in response to the contacts to be close to or depart from each other. However, in some embodiments, the viewport can be set once the contacts are detected.

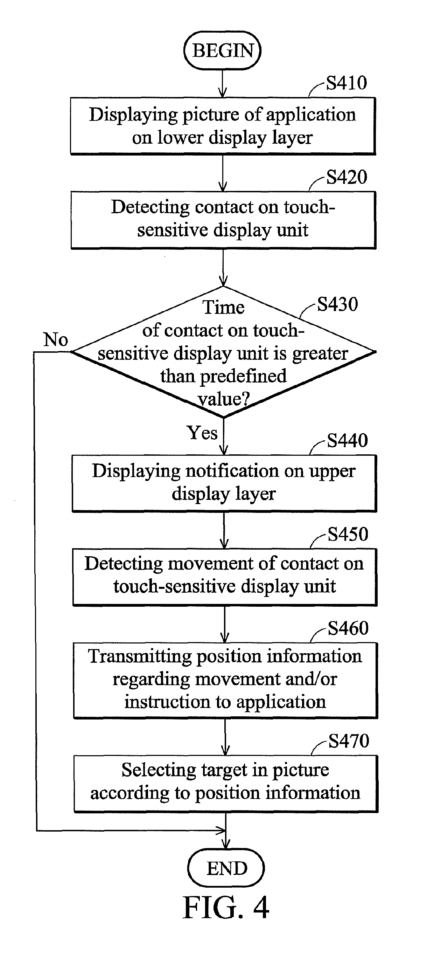

Fig. 4 is a flowchart of another exemplary embodiment of a method for application management of the invention. The method for application management can be used for an electronic device, such as a PDA (Personal Digital Assistant), a smart phone, a mobile phone, a MID (Mobile Internet Device, MID), a laptop computer, a car computer, a digital camera, a multi-media player or a game device. In this embodiment, a selection function is disclosed.

In step S410, a picture of an application is displayed on a lower display layer in a touch-sensitive display unit. Similarly, multiple display layers can be displayed simultaneously in the touch-sensitive display unit. When multiple display layers are simultaneously displayed in the touch-sensitive display unit, all or a part of the picture displayed in a lower display layer can be covered by another picture displayed in an upper display layer. The upper display layer is visually above the lower display layer. In step S420, at least one contact of an input tool (object), such as a stylus or a finger near or on the touch-sensitive display unit is detected. Similarly, in some embodiments, the first N samples of the detected contacts are kept to avoid mis-touch of the touch-sensitive display unit. In step S430, it is determined whether the time of the contact on the touch-sensitive display unit is greater than a predefined value. If the time of the contact on the touch-sensitive display unit is not greater than the predefined value (No in step S430), the procedure is completed. If the time of the contact on the touch-sensitive display unit is greater than the predefined value (Yes in step S430), in step S440, a notification is displayed on the upper display layer in the touch-sensitive display unit. In some embodiments, the notification can be used to notify a user that the selection function has been activated. In step S450, a movement of the contact is detected, and in step S460, position information regarding the movement, such as coordinates of a beginning position and an end position of the contact and/or an instruction is transmitted to the application. In some embodiments, the instruction can instruct the application to perform a select function according to the position information. In response to the instruction, in step S470, the application selects at least one target, such as object/text/item in the picture according to the position information. For example, the targets within the region defined by the position information are selected.

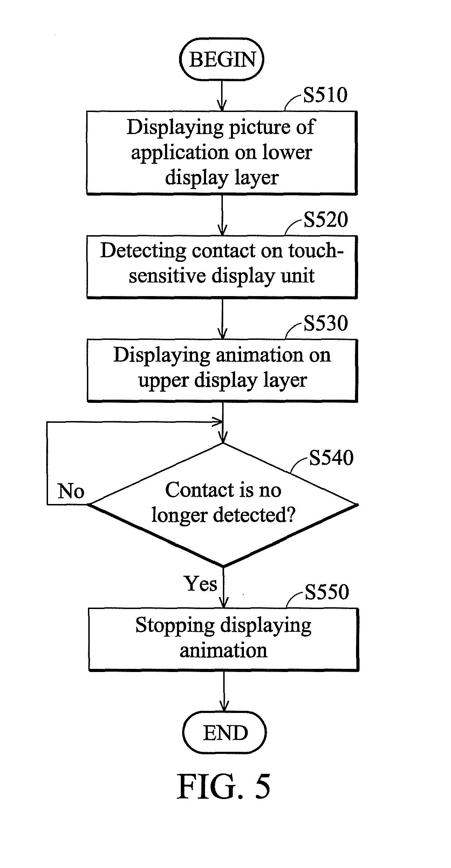

Fig. 5 is a flowchart of another exemplary embodiment of a method for application management of the invention. The method for application management can be used for an electronic device, such as a PDA (Personal Digital Assistant), a smart phone, a mobile phone, a MID (Mobile Internet Device, MID), a laptop computer, a car computer, a digital camera, a multi-media player or a game device. In this embodiment, an animation function is disclosed.

In step S510, a picture of an application is displayed on a lower display layer in a touch-sensitive display unit. Similarly, multiple display layers can be displayed simultaneously in the touch-sensitive display unit. When multiple display layers are simultaneously displayed in the touch-sensitive display unit, all or a part of the picture displayed in a lower display layer can be covered by another picture displayed in an upper display layer. The upper display layer is visually above the lower display layer. In step S220, at least one contact of an input tool (object), such as a stylus or a finger near or on the touch-sensitive display unit is detected. Similarly, in some embodiments, the first N samples of the detected contacts are kept to avoid mis-touch of the touch-sensitive display unit. In response to the contact, in step S530, an animation is displayed on an upper display layer in the touch-sensitive display unit. In some embodiments, the animation is displayed at the contact position. In step S540, it is determined whether the contact is no longer detected near or on the touch-sensitive display unit. If the contact is still detected near or on the touch-sensitive display unit (No in step S540), the procedure remains at step S540. If the contact is no longer detected near or on the touch-sensitive display unit (Yes in step S550), the animation or a last frame of the animation is stopped to be displayed.

For an example employing a scrollbar, the application does not recognize the animation. When a contact is located at a position of a scrollbar of a picture of the application, the animation representing the scrollbar style is changed and can be displayed at the contact position. It is understood that, as described, multiple display layers can be simultaneously displayed in the touch-sensitive display unit. In some embodiments, in addition to the upper and lower display layers, a middle display layer is further employed. In the middle display layer, a specific image can be displayed at a position corresponding to the scrollbar, such that the scrollbar displayed in the lower display layer is covered by the specific image displayed in the middle display layer.

Therefore, the methods and systems of the invention create a virtual desktop illusion for an application in different display layers, thus providing an interface and a variety of functions for applications.

Systems and methods for application management, or certain aspects or portions thereof, may take the form of a program code (i.e., executable instructions) embodied in tangible media, such as floppy diskettes, CD-ROMS, hard drives, or any other machine-readable storage medium, wherein, when the program code is loaded into and executed by a machine, such as a computer, the machine thereby becomes an apparatus for practicing the methods. The methods may also be embodied in the form of a program code transmitted over some transmission medium, such as electrical wiring or cabling, through fiber optics, or via any other form of transmission, wherein, when the program code is received and loaded into and executed by a machine, such as a computer, the machine becomes an apparatus for practicing the disclosed methods. When implemented on a general-purpose processor, the program code combines with the processor to provide a unique apparatus that operates analogously to application specific logic circuits.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalent.

**Claims**

1.  A computer-implemented method for application management for use in a computer, wherein the computer is programmed to perform the steps of:

    displaying a first picture of an application on a lower display layer in a touch-sensitive display unit;
    detecting at least one contact on the touch-sensitive display unit; and
    in response to the at least one contact, displaying a second picture on an upper display layer in the touch-sensitive display unit, wherein the upper display layer is visually above the lower display layer.

2.  The method of claim 1, wherein the at least one contact comprises a first contact and a second contact, and the method further comprises:

    setting a viewport according to the positions of the first and second contacts, wherein the viewport is a region defined by the contacts in the first picture; and
    displaying the viewport as the second picture on the upper display layer in the touch-sensitive display unit.

3.  The method of claim 2, further comprising:

    determining whether the contacts are close to or depart from each other; and
    in response to the contacts being close to or depart from each other, displaying the viewport on the upper display layer in the touch-sensitive display unit.

4.  The method of claim 2, further comprising:

    determining whether the contacts are close to or depart from each other; and
    dynamically adjusting the viewport according to the positions of the contacts, wherein when the contacts are close to each other, the viewport becomes larger, and when the contacts depart from each other, the viewport becomes smaller.

5.  The method of claim 2, wherein the viewport is a region defined by the contacts in the picture, and a part of the picture defined by the viewport is magnified to a size of the whole display area of the touch-sensitive display unit, and displayed in the upper display layer in the touch-sensitive display unit.

6.  The method of claim 5, further comprising:

    detecting a click on the touch-sensitive display unit;
    re-mapping the position of the click; and
    transmitting the re-mapped position of the click to the application.

7.  The method of claim 1, further comprising:

    determining whether the time of the at least one contact on the touch-sensitive display unit is greater than a predefined value; and

when the time of the at least one contact on the touch-sensitive display unit is greater than the predefined value, displaying a notification as the second picture on the upper display layer in the touch-sensitive display unit.

8. The method of claim 7, further comprising:

   detecting a movement of the at least one contact; and
   transmitting position information regarding the movement to the application.

9. The method of claim 8, further comprising:

   transmitting an instruction to the application; and
   in response to the instruction, selecting at least one target in the first picture according to the position information by the application.

10. The method of claim 1, wherein the second picture is an animation, and the method further comprises a step of stopping the display of the animation once the at least one contact is no longer detected on the touch-sensitive display unit.

11. A system for application management for use in an electronic device, comprising:

    means 110 for comprising a first picture of an application 111; and
    means 120 for displaying the first picture of the application 111 on a lower display layer;
    means 130 for detecting at least one contact on the means 120 for displaying the first picture of the application, and in response to the at least one contact, displaying a second picture on an upper display layer in the display means 120, wherein the upper display layer is visually above the lower display layer.

12. The system of claim 11, wherein the at least one contact comprises a first contact and a second contact, and the system further comprises means 130 for setting a viewport according to the positions of the first and second contacts, and displaying the viewport as the second picture on the upper display layer in the display means 120, wherein the viewport is a region defined by the contacts in the first picture.

13. The system of claim 12, wherein the system further comprises means 130 for determining whether the contacts are close to or depart from each other, and in response to the contacts being close to or depart from each other, displays the viewport on the upper display layer in the display means 120.

14. The system of claim 12, wherein the system further comprises means 130 for determining whether the contacts are close to or depart from each other, and dynamically adjusting the viewport according to the positions of the contacts, wherein when the contacts are close to each other, the viewport becomes larger, and when the contacts depart from each other, the viewport becomes smaller.

15. The system of claim 12, wherein the viewport is a region defined by the contacts in the picture, and a part of the picture defined by the viewport is magnified to a size of the whole display area of the display means 120, and displayed in the upper display layer in the display means 120.

16. The system of claim 15, wherein the system further comprises means 130 for detecting a click on the display means, re-mapping the position of the click, and transmitting the re-mapped position of the click to the application 111.

17. The system of claim 11, wherein the system further comprises means 130 for determining whether the time of the at least one contact on the display means 120 is greater than a predefined value, and when the time of the at least one contact on the display means 120 is greater than the predefined value, the system further comprises means 130 for displaying a notification as the second picture on the upper display layer in the display means 120.

18. The system of claim 17, wherein the system further comprises means 130 for detecting a movement of the at least one contact, and transmitting position information regarding the movement to the application 111.

19. The system of claim 18, wherein the system further comprises means 130 for transmitting an instruction to the application 111, and in response to the instruction, the application 111 selects at least one target in the first picture according to the position information.

**20.** The system of claim 11, wherein the second picture is an animation, and the system further comprises means 130 for stopping displaying the animation once the at least one contact is no longer detected on the display means 120.

**21.** A machine-readable storage medium comprising a computer program, which, when executed, causes a device to perform a method of any of claims 1-10 for application management.

100

110                                    120

111              112

| Application | Management Module | | Touch-Sensitive Display Unit |

Storage Unit

Processing Unit        ∼130

System For Application Management

FIG. 1

BEGIN

Displaying first picture of application
on lower display layer ⸺ S210

Detecting contact on touch-sensitive
display unit ⸺ S220

Displaying second picture on upper
display layer ⸺ S230

END

FIG. 2

BEGIN

Displaying picture of application on lower display layer /S310

Detecting at least two contact on touch-sensitive display unit /S320

Contacts are close or depart from each other? /S330

Yes → Setting viewport according to contact positions /S340 → Displaying viewport on upper display layer /S350

No → Click is detected? /S360

No →

Yes → Re-mapping click position /S370

Transmitting re-mapped click position to application /S380

END

FIG. 3

BEGIN

Displaying picture of application
on lower display layer ⟋S410

Detecting contact on touch-
sensitive display unit ⟋S420

Time
of contact on touch-
sensitive display unit is greater
than predefined
value? ⟋S430

No

Yes

Displaying notification on upper
display layer ⟋S440

Detecting movement of contact on
touch-sensitive display unit ⟋S450

Transmitting position information
regarding movement and/or
instruction to application ⟋S460

Selecting target in picture
according to position information ⟋S470

END

FIG. 4

BEGIN

Displaying picture of
application on lower
display layer

S510

Detecting contact on touch-
sensitive display unit

S520

Displaying animation on
upper display layer

S530

Contact is no
longer detected?

S540

No

Yes

Stopping displaying
animation

S550

END

FIG. 5

Europäisches
Patentamt

European
Patent Office

Office européen
des brevets

**EUROPEAN SEARCH REPORT**

Application Number

EP 10 17 3449

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/125799 A1 (HILLIS W D [US] ET AL HILLIS W DANIEL [US] ET AL) 15 June 2006 (2006-06-15) * paragraphs [0008], [0027], [0061] - [0063], [0072], [0087], [0090], [0092], [0093], [0095], [0098]; figures 1A,1B,2B,4A,4B * | 1-5, 8-15, 18-21 | INV. G06F3/048 |
| A | US 2008/165255 A1 (CHRISTIE GREG [US] ET AL) 10 July 2008 (2008-07-10) * paragraph [0119]; figure 17 * | 5,15 | |

TECHNICAL FIELDS
SEARCHED (IPC)

G06F

The present search report has been drawn up for all claims

| Place of search | Date of completion of the search | Examiner |
|---|---|---|
| Munich | 9 November 2010 | Thibaudeau, Jean |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 10 17 3449

This annex lists the patent family members relating to the patent documents cited in the above-mentioned European search report.
The members are as contained in the European Patent Office EDP file on
The European Patent Office is in no way liable for these particulars which are merely given for the purpose of information.

09-11-2010

| Patent document cited in search report | | Publication date | Patent family member(s) | | Publication date |
|---|---|---|---|---|---|
| US 2006125799 | A1 | 15-06-2006 | EP 1952221 A2<br>US 2010039446 A1<br>WO 2007061839 A2 | | 06-08-2008<br>18-02-2010<br>31-05-2007 |
| US 2008165255 | A1 | 10-07-2008 | WO 2008085789 A2 | | 17-07-2008 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61236376 A
- US 71872910 A